# EUROPEAN PATENT SPECIFICATION

(11) **EP 2 922 329 B1**
(45) Date of publication and mention of the grant of the patent: **14.11.2018**
(21) Application number: 13854619.7
(22) Date of filing: 13.09.2013
(51) Int. Cl.: H04W 12/12, H04W 74/08, H04W 72/04

(54) **METHOD AND DEVICE FOR FILTERING FALSE CHANNEL REQUEST**
VERFAHREN UND VORRICHTUNG ZUM FILTERN FALSCHER KANALANFRAGEN
PROCÉDÉ ET DISPOSITIF POUR FILTRER UNE FAUSSE DEMANDE D'UN CANAL

(30) Priority: 13.11.2012 CN 201210453829
(43) Date of publication of application: 23.09.2015
(73) Proprietor: ZTE Corporation, Shenzhen, Guangdong 518057 (CN)
(72) Inventor: WANG, Hongjian, Shenzhen Guangdong 518057 (CN); FAN, Xuefeng, Shenzhen Guangdong 518057 (CN)
(74) Representative: Novagraaf Technologies
(86) International application number: PCT/CN2013/083499
(87) International publication number: WO 2014/075501

(56) References cited:
- WO-A1-2009/105003
- CN-A- 101 040 479
- CN-A- 102 053 242
- CN-A- 102 196 441
- US-A1- 2013 223 241

## Description

### Technical Field

The present invention relates to the technical field of communications, and in particular to a method and device for filtering a false channel request.

### Background

When a terminal in a Global System for Mobile Communication (GSM) accesses a network, the terminal reports a channel request message to request for a wireless resource for access interaction at first, and a channel request is the first step for the terminal to access the network for any service, and is an uplink message. Due to the complexity of a wireless environment as well as the appearance of various kinds of wireless communication equipment, interference of an uplink becomes stronger and stronger during wireless communication, which causes more and more influence, including a false channel request. A channel request belongs to an access burst, and such an access burst has longer access buffer bits, usually 68.25 bits, and contains less information, so that many uplink interference signals are easily decoded into channel request messages. After a false channel request message is received, a network side allocates a wireless resource to it, which causes wireless resource waste, and may further cause wireless resource congestion and disable a service to be implemented in serious cases.

A false channel request discovered at present usually has the characteristics of burstiness, randomness and the like, and is long or short in duration. By virtue of fixity of its filtering threshold, a conventional filtering mechanism for a false channel request in the GSM cannot be adapted to the characteristic of uncertainty of the false channel request, and as a consequence, when a false channel request appears and the network side allocates a wireless resource to it, wireless resource waste is easily caused and a normal service may not be implemented. WO 2009/105003 discloses detection of false channel requests based on a single threshold used as comparison reference level with the received signal level which, when exceeded, indicates an excessive rate of false channel requests.

### Summary

The embodiments of the present invention is to provide a method and device for filtering a false channel request, so as to increase a utilization rate of a wireless resource of a network and avoid the condition that a normal service cannot be implemented due to the existence of a false channel request.

The embodiment of the present invention provides a method for filtering a false channel request, which includes:
comparing a current channel request with received channel requests respectively, and judging whether the current channel request and the received channel requests meet preset initial false channel request filtering conditions or not;
if the current channel request and the received channel requests meet a part of the preset initial false channel request filtering conditions, adjusting the false channel request filtering conditions according to the current channel request and the received channel requests; and
filtering the current channel request and the received channel requests according to the adjusted false channel request filtering conditions.

Preferably, the initial false channel request filtering conditions include:
a. the current channel request and the received channel requests have the same random access value;
b. an absolute value of frame number difference between the current channel request and each of the received channel requests are smaller than or equal to a preset frame number threshold value;
c. an absolute value of time advance difference between the current request channel and each of the received channel requests is smaller than or equal to a preset time advance threshold value;
d. an absolute value of receiving level difference between the current channel request and each of the received channel requests is smaller than or equal to a preset receiving level threshold value; and
e. after the current channel request is respectively compared with the received channel requests, the number of the received channel requests meeting the conditions a, b and c reaches a number threshold value, or the number of the received channel requests meeting the conditions a, b and d reaches the number threshold value.

Preferably, comparing the current channel request with the received channel requests includes:
comparing the current channel request with a certain number of received channel requests according to the initial false channel request filtering conditions; and
recording a range of a current frame number threshold value, a range of a current time advance threshold value, a range of a current receiving level threshold value and a current number threshold value of the received channel requests meeting the conditions a, b and c or a current number threshold value of the received channel requests meeting the conditions a, b and d, which are all obtained after comparison.

Preferably, based on that the current channel request and the received channel requests meet a part of the preset initial false channel request filtering conditions, adjusting the false channel request filtering conditions according to the current channel request and the received channel requests includes:
if the current channel request meets a part of the initial false channel request filtering conditions, judging whether a percentage of the received channel requests meeting the conditions a, b and c or the received channel requests meeting the conditions a, b and d in all the channel requests is more than or equal to a first extreme value or not;
if YES, adjusting the number threshold value to be the current number threshold value, and if NOT, judging whether the percentage of the received channel requests meeting the condition a in all the channel requests is more than or equal to a second extreme value or not; and
if YES, adjusting the frame number threshold value, the time advance threshold value and the receiving level threshold value to be a maximum value of the current frame number threshold value, a maximum value of the current time advance threshold value and a maximum value of the current receiving level threshold value respectively according to the range of the current frame number threshold value, the range of the current time advance threshold value and the range of the current receiving level threshold value.

Preferably, after filtering the current channel request and the received channel requests according to the adjusted false channel request filtering conditions, the method further includes:
if the number threshold value of the received channel requests meeting the conditions a, b and c, or the number of the received channel requests meeting the conditions a, b and d and meeting the condition a are kept to be zero within a set time, restoring the false channel request filtering conditions to be the initial false channel request filtering conditions.

The embodiment of the present invention further provides a device for filtering a false channel request, which includes:
a comparison component configured to compare a current channel request with received channel requests respectively;
a judgment component configured to judge whether the current channel request and the received channel requests meet preset initial false channel request filtering conditions or not;
a regulation component configured to adjust the false channel request filtering conditions according to the current channel request and the received channel requests; and
a filtering component configured to filter the current channel request and the received channel requests according to the adjusted false channel request filtering conditions.

Preferably, the initial false channel request filtering conditions include:
a. the current channel request and the received channel requests have the same random access value;
b. an absolute value of frame number difference between the current channel request and each of the received channel requests is smaller than or equal to a preset frame number threshold value;
c. an absolute value of time advance difference between the current request channel and each of the received channel requests is smaller than or equal to a preset time advance threshold value;
d. an absolute value of receiving level difference between the current channel request and each of the received channel requests is smaller than or equal to a preset receiving level threshold value; and
e. the current channel request is respectively compared with the received channel requests, and the number of the received channel requests meeting the conditions a, b and c reaches a number threshold value, or the number of the received channel requests meeting the conditions a, b and d reaches a number threshold value.

Preferably, the comparison component includes:
a comparison element configured to compare the current channel request with a certain number of received channel requests according to the initial false channel request filtering conditions; and
a recording element configured to record a range of a current frame number threshold value, a range of a current time advance threshold value, a range of a current receiving level threshold value and a current number threshold value of the received channel requests meeting the conditions a, b and c or a current number threshold value of the received channel requests meeting the conditions a, b and d, which are all obtained after comparison.

Preferably, the regulation component includes:
a first judgment element configured to judge whether a percentage of the received channel requests meeting the conditions a, b and c or the received channel requests meeting the conditions a, b and d in all the channel requests is more than or equal to a first extreme value or not;
a first regulation element configured to adjust the number threshold value to be the current number threshold value;
a second judgment element configured to judge whether the percentage of the received channel requests meeting the condition a in all the channel requests is more than or equal to a second extreme value or not; and
a second regulation element configured to adjust the frame number threshold value, the time advance threshold value and the receiving level threshold value to be a maximum value of the current frame number threshold value, a maximum value of the current time advance threshold value and a maximum value of the current receiving level threshold value respectively according to the range of the current frame number threshold value, the range of the current time advance threshold value and the range of the current receiving level threshold value.

Preferably, the device for filtering the false channel request further includes:
a restoration component configured to, if the number threshold value of the received channel requests meeting the conditions a, b and c or the numbers of the received channel requests meeting the conditions a, b and d and meeting the condition a are kept to be zero within a set time, restore the false channel request filtering conditions to be the initial false channel request filtering conditions.

Preferably, the device is applied to a Base Station System (BSS) and born in a processing unit of the BSS.

According to the embodiment of the present invention, the current channel request is compared with the received channel requests, and whether the current channel request and the received channel requests meet the preset initial false channel request filtering conditions or not is judged; when the current channel request and the received channel requests meet a part of the initial false channel request filtering conditions, the false channel request filtering conditions are adjusted according to the current channel request and the received channel requests; and the current channel request and the received channel requests are filtered according to the adjusted false channel request filtering conditions. Each filtering condition is dynamically adjusted according to a variation characteristic of the false channel request, thereby achieving a timely and ideal filtering effect, increasing a utilization rate of a wireless resource of a network and avoiding the condition that a normal service cannot be implemented due to the existence of the false channel request.

### Brief Description of the Drawings

Fig. 1 is a flowchart of a method for filtering a false channel request according to an embodiment of the present invention;
Fig. 2 is a flowchart of comparing a current channel request with received channel requests in a method for filtering a false channel request according to an embodiment of the present invention;
Fig. 3 is a flowchart of adjusting false channel request filtering conditions in a method for filtering a false channel request according to an embodiment of the present invention;
Fig. 4 is a flowchart of a method for filtering a false channel request according to another embodiment of the present invention;
Fig. 5 is a structure diagram of a device for filtering a false channel request according to an embodiment of the present invention;
Fig. 6 is a structure diagram of a comparison component of a device for filtering a false channel request according to the present invention;
Fig. 7 is a structure diagram of a regulation component of a device for filtering a false channel request according to the present invention; and
Fig. 8 is a structure diagram of a device for filtering a false channel request according to another embodiment of the present invention.

The implementation of the purpose, function characteristics and advantages of the embodiment of the present invention are further described with reference to embodiments and the drawings.

### Detailed Description of the Embodiments

Loose initial threshold values are set for all threshold values involved in the embodiments of the present invention.

It should be understood that the specific embodiments described here are only adopted to explain the present invention and not intended to limit the present invention.

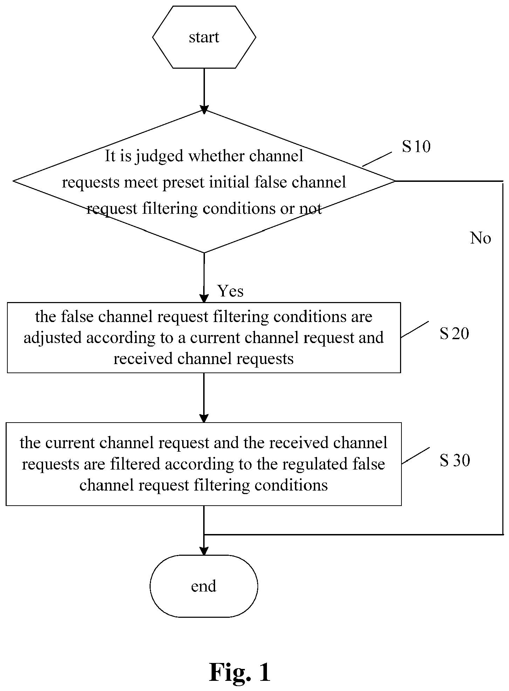

As shown in Fig. 1, Fig. 1 is a flowchart of a method for filtering a false channel request according to an embodiment of the present invention.

The embodiment of the present invention provides a method for filtering a false channel request, which includes the following steps.

Step 10: a current channel request is compared with received channel requests respectively, and it is judged whether the current channel request and the received channel requests meet preset initial false channel request filtering conditions or not; if the current channel request and the received channel requests meet a part of the initial false channel request filtering conditions, Step 20 is performed;
Step 20: the false channel request filtering conditions are adjusted according to the current channel request and the received channel requests.

Step 30: the current channel request and the received channel requests are filtered according to the adjusted false channel request filtering conditions.

After the current channel request is received, the current channel request is compared with the received channel request in a system respectively to judge whether the current channel request and the received channel requests meet the preset initial false channel request filtering conditions or not. In the embodiment, the initial false channel request filtering conditions include:
a. the current channel request and the received channel requests have the same random access value;
b. an absolute value of frame number difference between the current channel request and each of the received channel requests is smaller than or equal to a preset frame number threshold value;
c. an absolute value of time advance difference between the current request channel and each of the received channel requests is smaller than or equal to a preset time advance threshold value;
d. an absolute value of receiving level difference between the current channel request and each of the the received channel requests is smaller than or equal to a preset receiving level threshold value; and
e. the current channel request is compared with the received channel requests respectively, and the number of the received channel requests meeting the conditions a, b and c or d reaches a number threshold value.

If the current channel request is determined to meet all the initial false channel request filtering conditions, that is, the current channel request meets a, b, c and d, it may be directly determined that the current channel request is a false channel request; while if the current channel request and the received channel requests meet a part of the initial false channel request filtering conditions, it is necessary to adjust the false channel request filtering conditions according to actual conditions of the current channel request and the received channel requests. Then, the current channel request and received channel requests meeting the adjusted false channel request filtering conditions are filtered according to the adjusted false channel request filtering conditions.

According to the embodiment of the present invention, the current channel request is compared with the received channel requests, and whether the current channel request and the received channel requests meet the preset initial false channel request filtering conditions or not is judged; when the current channel request and the received channel requests meet a part of the initial false channel request filtering conditions, the false channel request filtering conditions are adjusted according to the current channel request and the received channel requests; and the current channel request and the received channel requests are filtered according to the adjusted false channel request filtering conditions. Each of the false channel request filtering condition is dynamically adjusted according to a variation characteristic of the false channel request, thereby achieving a timely and ideal filtering effect, increasing a utilization rate of a wireless resource of a network and avoiding the condition that a normal service may not be implemented due to the existence of the false channel request.

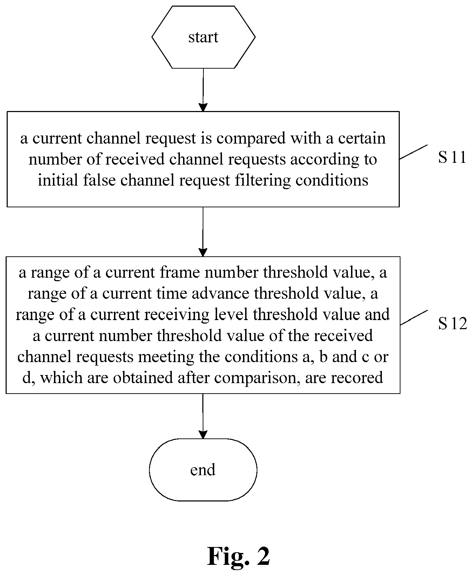

As shown in Fig. 2, Fig. 2 is a flowchart of comparing a current channel request and received channel requests in a method for filtering a false channel request according to an embodiment of the present invention.

In the embodiment, Step 10 further includes the following steps.

Step 11: the current channel request is compared with a certain number of received channel requests respectively according to the initial false channel request filtering conditions.

After the current channel request is received, a certain number of received channel requests are selected for comparison with the current channel request according to the initial false channel request filtering conditions. In the embodiment, the number of the received channel requests compared with the current channel request may be set to be K, and the current channel request is respectively compared with the K received channel requests. That is, the current channel request and the received channel requests are compared and judged whether to have the same random access value or not, and frame number difference, time advance difference and receiving level difference between the current channel request and each of the received channel requests are calculated; and moreover, the received channel requests meeting the conditions a, b and c or the conditions a, b and d are judged whether to exist in the K received channel requests or not.

Step 12: a range of a current frame number threshold value, a range of a current time advance threshold value, a range of a current receiving level threshold value and a current number threshold value of the received channel requests meeting the conditions a, b and c or the conditions a, b and d are recorded.

After the current channel request is compared with the K received channel requests respectively, the range of the current frame number threshold value, the range of the current time advance threshold value, the range of the current receiving level threshold value and the current number threshold value of the received channel requests meeting the conditions a, b and c or the conditions a, b and d, which are obtained by calculation after the current channel request is compared with each of the received channel requests respectively, are recorded as references during the regulation of the false channel request filtering conditions. The range of the current frame number threshold value is an interval formed by a minimum value and a maximum value of the calculated frame number difference between the current channel request and each of the K received channel requests; The range of the current frame number threshold value is an interval formed by a minimum value and a maximum value of the calculated frame number difference between the current channel request and each of the K received channel requests; The range of the current frame number threshold value is an interval formed by a minimum value and a maximum value of the calculated frame number difference between the current channel request and each of the K received channel requests; and the current number threshold value is the number of the received channel requests meeting the conditions a, b and c or the conditions a, b and d in the K received channel requests.

According to the initial false channel request filtering conditions, the current channel request and the received channel requests are compared and judged whether to have the same random access value or not, and the frame number difference, time advance difference and receiving level difference between the current channel request and each of the received channel requests are calculated; moreover, the received channel requests meeting the conditions a, b and c or the conditions a, b and d are judged whether to exist in the K received channel requests or not; and the range of the current frame number threshold value, the range of the current time advance threshold value, the range of the current receiving level threshold value and the current number threshold value of the received channel requests meeting the conditions a, b and c or the conditions a, b and d, which are obtained by calculation after comparison, of the current channel request and the received channel requests are recorded. Therefore, the recorded comparison results may be taken as references during the regulation of the false channel request filtering conditions, and the false channel request filtering conditions are further dynamically adjusted.

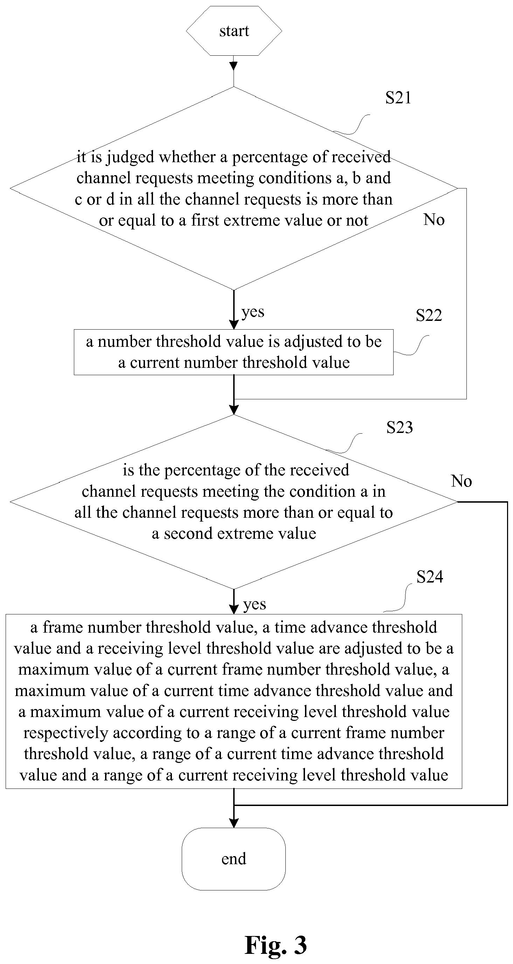

As shown in Fig. 3, Fig. 3 is a flowchart of adjusting false channel request filtering conditions in a method for filtering a false channel request according to an embodiment of the present invention.

In the embodiment, Step 20 further includes the following steps.

Step 21: if the current channel request meets a part of the initial false channel request filtering conditions, it is judged whether a percentage of the received channel requests meeting the conditions a, b and c or the conditions a, b and d in all the channel requests is more than or equal to a first extreme value or not. If YES, turn to Step 22; otherwise turn to Step 23.

Step 22: the number threshold value is adjusted to be a current number threshold value.

Step 23: it is judged whether the percentage of the received channel requests meeting the condition a in all the channel requests is more than or equal to a second extreme value or not. If YES, turn to Step 24.

step 24: the frame number threshold value, the time advance threshold value and the receiving level threshold value are adjusted to be a maximum value of current frame number threshold values, a maximum value of current time advance threshold values and a maximum value of current receiving level threshold values respectively according to the range of the current frame number threshold value, the range of the current time advance threshold value and the range of the current receiving level threshold value.

If the current channel request only meets a part of the initial false channel request filtering conditions, that is, the current channel request does not completely meet the initial false channel request filtering conditions, whether the percentage of the received channel requests, which meets the conditions a, b and c or the conditions a, b and d and are in the K received channel requests, in all the channel requests in the system is more than or equal to the first extreme value or not is judged at first. In the embodiment, the received channel requests meeting the conditions a, b and c or the conditions a, b and d may be defined as quasi-false channel requests; and the first extreme value is a preset extreme value for determining the number of the quasi-false channel requests according to an actual condition.

When the percentage of the received channel requests meeting the conditions a, b and c or the conditions a, b and d in all the channel requests in the system is more than or equal to the first extreme value, the number threshold value is adjusted to be the current number threshold value for the filtration of the quasi-false channel requests meeting the conditions according to the current number threshold value; and when the percentage of the received channel requests meeting the conditions a, b and c or the conditions a, b and d in all the channel requests in the system is smaller than the first extreme value, whether the percentage of the received channel requests, which meets the condition a and are in the K received channel requests, in all the channel requests is more than or equal to a second extreme value or not is further judged. In the embodiment, the received channel requests meeting the condition a may be defined as similar false channel requests; and the second extreme value is a preset extreme value for determining the number of the similar false channel requests according to an actual condition.

If the percentage of the received channel requests meeting the condition a in all the channel requests is more than or equal to the second extreme value, the frame number threshold value, the time advance threshold value and the receiving level threshold value are adjusted to be the maximum value of the current frame number threshold values, the maximum value of the current time advance threshold values and the maximum value of the current receiving level threshold value according to the range of the current frame number threshold value, the range of the current time advance threshold value and the range of the current receiving level threshold value, so as to filter the similar false channel requests meeting the condition a according to the adjusted threshold values.

When the current channel request meets a part of the initial false channel request filtering conditions, whether the percentages of the quasi-false channel requests and the similar false channel requests in all the channel requests are more than or equal to the preset extreme values or not is judged, and the false channel request filtering conditions are dynamically adjusted to filter the quasi-false channel requests and similar false channel requests meeting the conditions according to the judgement results and the previously recorded comparison results of the current channel request and the received channel requests, thereby further achieving the timely and ideal filtering effect, increasing the utilization rate of the wireless resource of the network and avoiding the condition that the normal service cannot be implemented due to the existence of the false channel request.

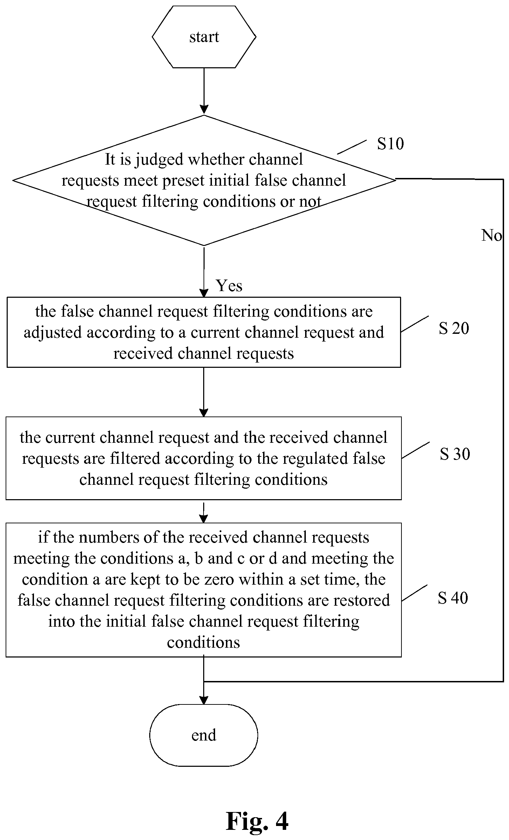

As shown in Fig. 4, Fig. 4 is a flowchart of a method for filtering a false channel request according to another embodiment of the present invention.

Based on the embodiment, after Step 30 is executed, the method for filtering the false channel request further includes the following steps.

Step 40: if the number of the received channel requests meeting the conditions a, b and c or the conditions of a, b and d, and the number of the received channel requests meeting the condition a are kept to be zero within a set time, the false channel request filtering conditions are restored to be the initial false channel request filtering conditions.

Moreover, interference of an uplink in a wireless communication system is reduced, and, the number of the currently received current channel requests, the number of the received channel requests meeting the conditions a, b and c or the conditions a, b and d, and the number of the received channel requests meeting the condition a are determined to be kept to be zero within the set time, so that it is indicated that there are no received false channel requests in the system. At this time, the false channel request filtering conditions are restored into the initial false channel request filtering conditions, and the received channel requests are continuously judged and filtered according to the initial false channel request filtering conditions.

If the number of the received channel requests meeting the conditions a, b and c, or meeting the conditions a, b and d and the number of the received channel requests meeting the condition a are kept to be zero within the set time, the false channel request filtering conditions are restored into the initial false channel request filtering conditions, and the received channel requests are continuously judged and filtered. Each filtering condition may be dynamically adjusted according to the variation characteristic of the false channel request.

The embodiment of the present invention further provides a device for filtering a false channel request.

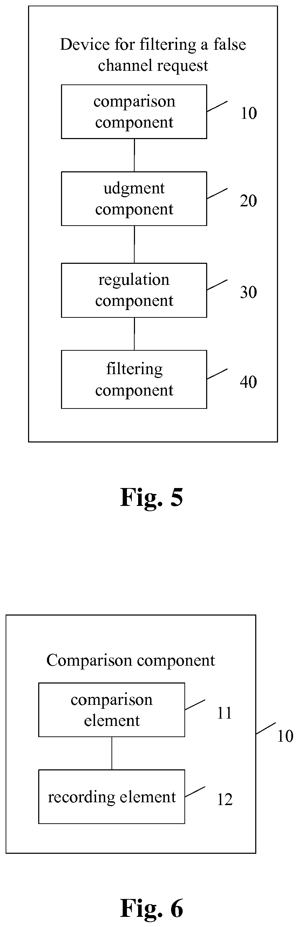

As shown in Fig. 5, Fig. 5 is a structure diagram of a device for filtering a false channel request according to an embodiment of the present invention.

According to the embodiment of the present invention, the device for filtering the false channel request includes:
a comparison component 10 configured to compare a current channel request with received channel requests;
a judgment component 20 configured to judge whether the current channel request and the received channel requests meet preset initial false channel request filtering conditions or not;
a regulation component 30 configured to adjust the false channel request filtering conditions according to the current channel request and the received channel requests; and
a filtering component 40 configured to filter the current channel request and the received channel requests according to the adjusted false channel request filtering conditions.

After receiving the current channel request, the current channel request is compared respectively with the received channel requests in a system through the comparison component 10, and whether the current channel request and the received channel requests meet the preset initial false channel request filtering conditions or not is judged through the judgment component 20. In the embodiment, the initial false channel request filtering conditions include:
a. the current channel request and the received channel requests have the same random access value;
b. an absolute value of frame number difference between the current channel request and each of the received channel requests is smaller than or equal to a preset frame number threshold value;
c. an absolute value of time advance difference between the current request channel and each of the received channel requests is smaller than or equal to a preset time advance threshold value;
d. an absolute value of receiving level difference between the current channel request and each of the received channel requests is smaller than or equal to a preset receiving level threshold value; and
e. the current channel request is respectively compared with the received channel requests, and the number of the received channel requests meeting the conditions a, b and c or meeting the conditions a, b and d reaches a number threshold value.

If the current channel request is determined to meet all the initial false channel request filtering conditions, that is, the current channel request meets a, b, c and d, it can be directly determined that the current channel request is a false channel request; while if the current channel request and the received channel requests meet a part of the initial false channel request filtering conditions, the regulation component 30 adjusts the false channel request filtering conditions according to actual conditions of the current channel request and the received channel requests. Then, the current channel request and received channel requests meeting the adjusted false channel request filtering conditions, are filtered through the filtering component 40 according to the adjusted false channel request filtering conditions.

In the embodiment of the present invention, the current channel request is compared with the received channel requests respectively, and whether the current channel request and the received channel requests meet the preset initial false channel request filtering conditions or not is judged; when the current channel request and the received channel requests meet a part of the initial false channel request filtering conditions, the false channel request filtering conditions are adjusted according to the current channel request and the received channel requests; and the current channel request and the received channel requests are filtered according to the adjusted false channel request filtering conditions. Each filtering condition is dynamically adjusted according to a variation characteristic of the false channel request, thereby achieving a timely and ideal filtering effect, increasing a utilization rate of a wireless resource of a network and avoiding the condition that a normal service cannot be implemented due to the existence of the false channel request.

As shown in Fig. 6, Fig. 6 is a structure diagram of a comparison component of a device for filtering a false channel request according to an embodiment of the present invention.

In the embodiment, the comparison component 10 includes:
a comparison element 11 configured to compare respectively the current channel request with a certain number of received channel requests according to the initial false channel request filtering conditions; and
a recording element 12 configured to record a range of a current frame number threshold value, a range of a current time advance threshold value, a range of a current receiving level threshold value and a current number threshold value of the received channel requests meeting the conditions a, b and c or meeting the conditions a, b and d, which are all obtained after comparison.

After the current channel request is received, the comparison element 11 selects a certain number of received channel requests, which is used for comparison with the current channel request according to the initial false channel request filtering conditions. In the embodiment, the number of the received channel requests compared with the current channel request may be set to be K, and the current channel request is respectively compared with the K received channel requests. That is, the current channel request and each of the received channel requests is compared and judged whether to have the same random access value or not, and frame number difference, time advance difference and receiving level difference of the current channel request and the received channel requests are calculated; and moreover, the received channel requests meeting the conditions a, b and c or meeting the conditions a, b and d are judged whether to exist in the K received channel requests or not.

After the current channel request is compared with the K received channel requests, the recording element 12 records the range of the current frame number threshold value, the range of the current time advance threshold value, the range of the current receiving level threshold value and the current number threshold value of the received channel requests meeting the conditions a, b and c or the conditions a, b and d, which are obtained by calculation after comparison, as references during the regulation of the false channel request filtering conditions. The range of the current frame number threshold value, the range of the current time advance threshold value and the range of the current receiving level threshold value are intervals formed by minimum values and maximum values of the calculated frame number differences, time advance differences and receiving level differences of the current channel request and the K received channel requests respectively; and the current number threshold value is the number of the received channel requests meeting the conditions a, b and c or meeting the conditions a, b and d in the K received channel requests.

The current channel request and the received channel requests are compared and judged whether to have the same random access value or not according to the initial false channel request filtering conditions, and the frame number differences, time advance differences and receiving level differences of the current channel request and the received channel requests are calculated; moreover, the received channel requests meeting the conditions a, b and c or meeting the conditions a, b and d are judged whether to exist in the K received channel requests or not; and the range of the current frame number threshold value, the range of the current time advance threshold value, the range of the current receiving level threshold value and the current number threshold value of the received channel requests meeting the conditions a, b and c or meeting the conditions a, b and d, which are obtained by calculation after comparison, of the current channel request and the received channel requests are recorded. Therefore, the recorded comparison results may be taken as references during the regulation of the false channel request filtering conditions, and the false channel request filtering conditions are further dynamically adjusted.

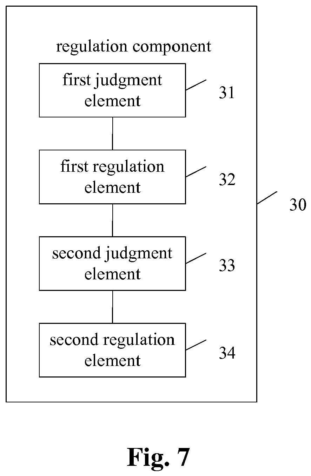

As shown in Fig. 7, Fig. 7 is a structure diagram of a regulation component according to a device for filtering a false channel request according to an embodiment of the present invention.

In the embodiment, the regulation component 30 includes:
a first judgment element 31 configured to judge whether a percentage of the received channel requests meeting the conditions a, b and c or meeting the conditions a, b and d in all the channel requests is more than or equal to a first extreme value or not;
a first regulation element 32 configured to adjust a number threshold value to be a current number threshold value;
a second judgment element 33 configured to judge whether the percentage of the received channel requests meeting the condition a in all the channel requests is more than or equal to a second extreme value or not; and
a second regulation element 34 configured to adjust the frame number threshold value, the time advance threshold value and the receiving level threshold value to be a maximum value of the current frame number threshold values, a maximum value of the current time advance threshold values and a maximum value of the current receiving level threshold values respectively according to the range of the current frame number threshold value, the range of the current time advance threshold value and the range of the current receiving level threshold value.

If the current channel request only meets a part of the initial false channel request filtering conditions, that is, the current channel request does not completely meet the initial false channel request filtering conditions, whether the percentage of the received channel requests meeting the conditions a, b and c or meeting the conditions a, b and d in the K received channel requests in all the channel requests in the system is more than or equal to the first extreme value or not is judged through the first judgment element 31 at first. In the embodiment, the received channel requests meeting the conditions a, b and c or meeting tihe conditions a, b and d may be defined as quasi-false channel requests; and the first extreme value is a preset extreme value for determining the number of the quasi-false channel requests according to an actual condition.

When the percentage of the received channel requests meeting the conditions a, b and c or meeting the conditions a, b and d in all the channel requests in the system is more than or equal to the first extreme value, the first regulation element 32 adjusts the number threshold value to be the current number threshold value for the filtration of the quasi-false channel requests meeting the conditions according to the current number threshold value; and when the percentage of the received channel requests meeting the conditions a, b and c or the conditions a, b and d in all the channel requests in the system is smaller than the first extreme value, whether the percentage of the received channel requests, which meet the condition a and are in the K received channel requests, in all the channel requests is more than or equal to a second extreme value or not is further judged through the second judgment element 33. In the embodiment, the received channel requests meeting the condition a may be defined as similar false channel requests; and the second extreme value is a preset extreme value for determining the number of the similar false channel requests according to an actual condition.

If the percentage of the received channel requests meeting the condition a in all the channel requests is more than or equal to the second extreme value, the second regulation element 34 adjusts the frame number threshold value, the time advance threshold value and the receiving level threshold value to be the maximum value of the current frame number threshold value, the maximum value of the current time advance threshold value and the maximum value of the current receiving level threshold value according to the range of the current frame number threshold value, the range of the current time advance threshold value and the range of the current receiving level threshold value, so as to filtrate the similar false channel requests meeting the condition a according to the adjusted threshold values.

When the current channel request meets a part of the initial false channel request filtering conditions, whether the percentages of the quasi-false channel requests and the similar false channel requests in all the channel requests are more than or equal to the preset extreme values or not is judged, and the false channel request filtering conditions are dynamically adjusted to filter the quasi-false channel requests and similar false channel requests meeting the conditions according to the judgement results and the previously recorded comparison results of the current channel request and the received channel requests, thereby further achieving the timely and ideal filtering effect, increasing the utilization rate of the wireless resource of the network and avoiding the condition that the normal service cannot be implemented due to the existence of the false channel request.

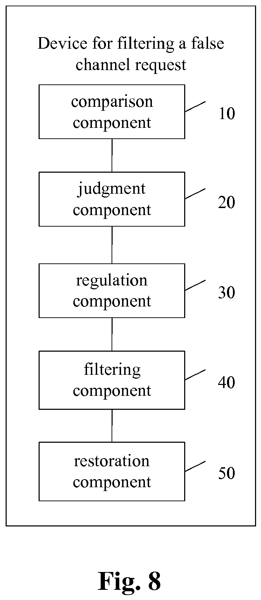

As shown in Fig. 8, Fig. 8 is a structure diagram of a device for filtering a false channel request according to an embodiment of the present invention.

Based on the embodiment, the device for filtering the false channel request in the present invention further includes:
a restoration component 50 configured to, if the number of the received channel requests meeting the conditions a, b and c or meeting the conditions a, b and d and the number of the received channel requests meeting the condition a are kept to be zero within a set time, restore the false channel request filtering conditions to be the initial false channel request filtering conditions.

Moreover, interference of an uplink in a wireless communication system is reduced, and, the number of the currently received current channel requests, the number of the received channel requests meeting the conditions a, b and c or meeting the conditions a, b and d, and the number of received channel requests meeting the condition a are determined to be kept to be zero within the set time, so that it is indicated that there are no received false channel requests in the system. At this time, the false channel request filtering conditions are restored into the initial false channel request filtering conditions through the restoration component 50, and the received channel requests are continuously judged and filtered according to the initial false channel request filtering conditions.

If the number of the received channel requests meeting the conditions a, b and c or meeting the conditions a, b and d and the number of the received channel requests meeting the condition a are kept to be zero within the set time, the false channel request filtering conditions are restored into the initial false channel request filtering conditions, and the received channel requests are continuously judged and filtered. Each filtering condition may be dynamically adjusted according to the variation characteristic of the false channel request.

Preferably, the method and device in the embodiment may be implemented in a BSS and born in a processing unit of the BSS.

The above is only the preferred embodiment of the present invention and not thus intended to limit the scope of the present invention, and equivalent structure or equivalent flow transformations made by virtue of contents of the description and drawings of the present invention or direct or indirect application of the contents of the description and drawings of the present invention to other related technical fields shall similarly be included in the scope of protection of the present invention.

### Industrial Applicability

The technical solutions provided by the embodiments of the present invention may be applied to the field of network access of terminals, the problem that a normal service cannot be implemented due to the existence of a false channel request is solved, and a utilization rate of a wireless resource of a network is increased.

## Claims

1. A method for filtering a false channel request, **characterized by** comprising:
comparing a current channel request with received channel requests respectively, and judging whether the current channel request and the received channel requests meet preset initial false channel request filtering conditions or not (S10);
based on that the current channel request and the received channel requests meet a part of the preset initial false channel request filtering conditions, adjusting the false channel request filtering conditions according to the current channel request and the received channel requests (S20); and
filtering the current channel request and the received channel requests according to the adjusted false channel request filtering conditions (S30).

2. The method for filtering the false channel request according to claim 1, **characterized in that** the initial false channel request filtering conditions comprise:
a. the current channel request and the received channel requests have the same random access value;
b. an absolute value of frame number difference between the current channel request and each of the received channel requests is smaller than or equal to a preset frame number threshold value;
c. an absolute value of time advance difference between the current request channel and each of the received channel requests is smaller than or equal to a preset time advance threshold value;
d. an absolute value of receiving level difference between the current channel request and each of the received channel requests is smaller than or equal to a preset receiving level threshold value; and
e. after the current channel request is compared with the received channel requests respectively, the number of the received channel requests meeting the conditions a, b and c reaches a number threshold value, or the number of the received channel requests meeting the conditions a, b and d reaches the number threshold value.

3. The method for filtering the false channel request according to claim 2, **characterized in that** comparing the current channel request with the received channel requests respectively comprises:
comparing the current channel request with a certain number of received channel requests respectively according to the initial false channel request filtering conditions (S11); and
recording a range of a current frame number threshold value, a range of a current time advance threshold value, a range of a current receiving level threshold value and the current number threshold value of the received channel requests meeting the conditions a, b and c or the current number threshold value of the received channel requests meeting the conditions a, b and d, which are all obtained after comparison (S12);
wherein the range of the current frame number threshold value is an interval formed by a minimum value and a maximum value of calculated frame number differences between the current channel request and each of the received channel requests; the range of the current time advance threshold value is an interval formed by a minimum value and a maximum value of calculated time advance differences between the current channel request and each of the received channel requests; the range of the current receiving level threshold value is an interval formed by a minimum value and a maximum value of calculated receiving level differences between the current channel request and each of the received channel requests and the current number threshold value is the number of the received channel requests meeting the conditions a, b and c or meeting the conditions a, b and d in the received channel requests.

4. The method for filtering the false channel request according to claim 3, **characterized in that** based on that the current channel request and the received channel requests meet a part of the preset initial false channel request filtering conditions, adjusting the false channel request filtering conditions according to the current channel request and the received channel requests comprises:
based on that the current channel request meets the part of the initial false channel request filtering conditions, judging whether a percentage of the received channel requests meeting the conditions a, b and c or the received channel requests meeting the conditions a, b and d in all the channel requests is more than or equal to a first extreme value or not (S21);
if YES, adjusting the number threshold value to be the current number threshold value (S22), and if NOT, judging whether the percentage of the received channel requests meeting the condition a in all the channel requests is more than or equal to a second extreme value or not (S23); and
if YES, adjusting the frame number threshold value, the time advance threshold value and the receiving level threshold value to be a maximum value of the current frame number threshold value, a maximum value of the current time advance threshold value and a maximum value of the current receiving level threshold value respectively according to the range of the current frame number threshold value, the range of the current time advance threshold value and the range of the current receiving level threshold value (S24).

5. The method for filtering the false channel request according to any one of claims 1 to 4, after filtering the current channel request and the received channel requests according to the adjusted false channel request filtering conditions, the method further comprises:
based on that the number of the received channel requests meeting the condition a is kept to be zero within a set time, restoring the false channel request filtering conditions to be the initial false channel request filtering conditions (S40).

6. The method for filtering the false channel request according to any one of claims 1 to 4, **characterized in that** the method is applied to a Base Station System (BSS) and born in a processing unit of the BSS.

7. A device for filtering a false channel request, **characterized by** comprising:
a comparison component (10) configured to compare a current channel request with received channel requests respectively;
a judgment component (20) configured to judge whether the current channel request and the received channel requests meet preset initial false channel request filtering conditions or not;
a regulation component (30) configured to adjust the false channel request filtering conditions according to the current channel request and the received channel requests; and
a filtering component (40) configured to filter the current channel request and the received channel requests according to the adjusted false channel request filtering conditions.

8. The device for filtering the false channel request according to claim 7, **characterized in that** the initial false channel request filtering conditions comprise:
a. the current channel request and the received channel requests have the same random access value;
b. an absolute value of frame number difference between the current channel request and each of the received channel requests is smaller than or equal to a preset frame number threshold value;
c. an absolute value of time advance difference between the current request channel and each of the received channel requests is smaller than or equal to a preset time advance threshold value;
d. an absolute value of receiving level difference between the current channel request and each of the received channel requests is smaller than or equal to a preset receiving level threshold value; and
e. after the current channel request is respectively compared with the received channel requests, the number of the received channel requests meeting the conditions a, b and c reaches a number threshold value, or the number of the received channel requests meeting the conditions a, b and d reaches the number threshold value.

9. The device for filtering the false channel request according to claim 8, **characterized in that** the comparison component (10) comprises:
a comparison element (11) configured to compare the current channel request with a certain number of received channel requests according to the initial false channel request filtering conditions; and
a recording element (12) configured to record a range of a current frame number threshold value, a range of a current time advance threshold value, a range of a current receiving level threshold value and a current number threshold value of the received channel requests meeting the conditions a, b and c or a current number threshold value of the received channel requests meeting the conditions a, b and d, which are all obtained after comparison;
wherein the range of the current frame number threshold value is an interval formed by a minimum value and a maximum value of calculated frame number differences between the current channel request and each of the received channel requests; the range of the current time advance threshold value is an interval formed by a minimum value and a maximum value of calculated time advance differences between the current channel request and each of the received channel requests; the range of the current receiving level threshold value is an interval formed by a minimum value and a maximum value of calculated receiving level differences between the current channel request and each of the received channel requests and the current number threshold value is the number of the received channel requests meeting the conditions a, b and c or meeting the conditions a, b and d in the received channel requests.

10. The device for filtering the false channel request according to claim 9, **characterized in that** the regulation component (30) comprises:
a first judgment element (31) configured to judge whether a percentage of the received channel requests meeting the conditions a, b and c or the received channel requests meeting the conditions a, b and d in all the channel requests is more than or equal to a first extreme value or not;
a first regulation element (32) configured to adjust the number threshold value to be the current number threshold value if a YES result is given by the first judgment element (31);
a second judgment element (33) configured to, if a NO result is given by the first judgment element (31), judge whether the percentage of the received channel requests meeting the condition a in all the channel requests is more than or equal to a second extreme value or not; and
a second regulation element (34) configured to, if a YES result is given by the second judgment element (33), adjust the frame number threshold value, the time advance threshold value and the receiving level threshold value to be a maximum value of the current frame number threshold value, a maximum value of the current time advance threshold value and a maximum value of the current receiving level threshold value respectively according to the range of the current frame number threshold value, the range of the current time advance threshold value and the range of the current receiving level threshold value.

11. The device for filtering the false channel request according to any one of claims 7 to 10, **characterized by** further comprising:
a restoration component (50) configured to, based on that the number of the received channel requests meeting the conditions a, b and c or the number of the received channel requests meeting the conditions a, b and d and meeting the condition a are kept to be zero within a set time, restore the false channel request filtering conditions to be the initial false channel request filtering conditions.

12. A Base Station System (BSS) including the device for filtering the false channel request according to any one of claims 7 to 11.

## Patentansprüche

1. Verfahren zum Filtern einer falschen Kanalanfrage, **dadurch gekennzeichnet, dass** es umfasst:
Vergleichen einer aktuellen Kanalanfrage jeweils mit empfangenen Kanalanfragen, und Beurteilen, ob die aktuelle Kanalanfrage und die empfangenen Kanalanfragen voreingestellte anfängliche Filterbedingungen für falsche Kanalanfragen erfüllen oder nicht (S10);
basierend darauf, dass die aktuelle Kanalanfrage und die empfangenen Kanalanfragen einen Teil der voreingestellten anfänglichen Filterbedingungen für falsche Kanalanfragen erfüllen, Anpassen der Filterbedingungen für falsche Kanalanfragen gemäß der aktuellen Kanalanfrage und den empfangenen Kanalanfragen (S20); und
Filtern der aktuellen Kanalanfrage und der empfangenen Kanalanfragen gemäß den angepassten Filterbedingungen für falsche Kanalanfragen (S30).

2. Verfahren zum Filtern der falschen Kanalanfrage nach Anspruch 1, **dadurch gekennzeichnet, dass** die anfänglichen Filterbedingungen für falsche Kanalanfragen umfassen:
a. die aktuelle Kanalanfrage und die empfangenen Kanalanfragen weisen denselben Direktzugriffswert auf;
b. ein Absolutwert einer Frame-Nummern-Differenz zwischen der aktuellen Kanalanfrage und jeder der empfangenen Kanalanfragen ist kleiner als oder gleich einem voreingestellten Frame-Nummern-Schwellenwert;
c. ein Absolutwert einer Time-Advance-Differenz zwischen dem aktuellen Anfragekanal und jeder der empfangenen Kanalanfragen ist kleiner als oder gleich einem voreingestellten Time-Advance-Schwellenwert;
d. ein Absolutwert einer Empfangspegeldifferenz zwischen der aktuellen Kanalanfrage und jeder der empfangenen Kanalanfragen ist kleiner als oder gleich einem voreingestellten Empfangspegel-Schwellenwert; und
e. nachdem die aktuelle Kanalanfrage mit jeweils den empfangenen Kanalanfragen verglichen wird, erreicht die Anzahl der empfangenen Kanalanfragen, die die Bedingungen a, b, und c erfüllen, einen Anzahlschwellenwert, oder erreicht die Anzahl der empfangenen Kanalanfragen, die die Bedingungen a, b und d erfüllen, den Anzahlschwellenwert.

3. Verfahren zum Filtern der falschen Kanalanfrage nach Anspruch 2, **dadurch gekennzeichnet, dass** das Vergleichen der aktuellen Kanalanfrage mit jeweils den empfangenen Kanalanfragen umfasst:
Vergleichen der aktuellen Kanalanfrage mit jeweils einer gewissen Anzahl von empfangenen Kanalanfragen gemäß den anfänglichen Filterbedingungen für falsche Kanalanfragen (S11); und
Aufzeichnen eines Bereichs eines aktuellen Frame-Nummern-Schwellenwerts, eines Bereichs eines aktuellen Time-Advance-Schwellenwerts, eines Bereichs eines aktuellen Empfangspegel-Schwellenwerts und des aktuellen Anzahlschwellenwerts der empfangenen Kanalanfragen, die die Bedingungen a, b und c erfüllen, oder des aktuellen Anzahlschwellenwerts der empfangenen Kanalanfragen, die die Bedingungen a, b und d erfüllen, die alle nach dem Vergleich erhalten werden (S12);
wobei der Bereich des aktuellen Frame-Nummern-Schwellenwerts ein Intervall ist, das von einem Minimalwert und einem Maximalwert von berechneten Frame-Nummern-Differenzen zwischen der aktuellen Kanalanfrage und jeder der empfangenen Kanalanfragen gebildet wird; der Bereich des aktuellen Time-Advance-Schwellenwerts ein Intervall ist, das von einem Minimalwert und einem Maximalwert von berechneten Time-Advance-Differenzen zwischen der aktuellen Kanalanfrage und jeder der empfangenen Kanalanfragen gebildet wird; der Bereich des aktuellen Empfangspegel-Schwellenwerts ein Intervall ist, das von einem Minimalwert und einem Maximalwert von berechneten Empfangspegeldifferenzen zwischen der aktuellen Kanalanfrage und jeder der empfangenen Kanalanfragen gebildet wird, und der aktuelle Anzahlschwellenwert die Anzahl der empfangenen Kanalanfragen ist, die die Bedingungen a, b und c erfüllen, oder die die Bedingungen a, b und d in den empfangenen Kanalanfragen erfüllen.

4. Verfahren zum Filtern der falschen Kanalanfrage nach Anspruch 3, **dadurch gekennzeichnet, dass** basierend darauf, dass die aktuelle Kanalanfrage und die empfangenen Kanalanfragen einen Teil der voreingestellten anfänglichen Filterbedingungen für falsche Kanalanfragen erfüllen, das Anpassen der Filterbedingungen für falsche Kanalanfragen gemäß der aktuellen Kanalanfrage und der empfangenen Kanalanfragen umfasst:
basierend darauf, dass die aktuelle Kanalanfrage den Teil der anfänglichen Filterbedingungen für falsche Kanalanfragen erfüllt, Beurteilen, ob ein Prozentsatz der empfangenen Kanalanfragen, die die Bedingungen a, b und c erfüllen, oder der empfangenen Kanalanfragen, die die Bedingungen a, b und d erfüllen, in allen den Kanalanfragen mehr als oder gleich einem ersten Extremwert ist oder nicht (S21);
wenn JA, Anpassen des Anzahlschwellenwerts so, dass er der aktuelle Anzahlschwellenwert ist (S22), und wenn NICHT, Beurteilen, ob der Prozentsatz der empfangenen Kanalanfragen, die die Bedingung a erfüllen, in allen den Kanalanfragen mehr als oder gleich einem zweiten Extremwert ist oder nicht (S23); und
wenn JA, Anpassen des Frame-Nummern-Schwellenwerts, des Time-Advance-Schwellenwerts und des Empfangspegel-Schwellenwerts so, dass sie jeweils gemäß dem Bereich des aktuellen Frame-Nummern-Schwellenwerts, dem Bereich des aktuellen Time-Advance-Schwellenwerts und dem Bereich des aktuellen Empfangspegel-Schwellenwerts ein Maximalwert des aktuellen Frame-Nummern-Schwellenwerts, ein Maximalwert des aktuellen Time-Advance-Schwellenwerts und ein Maximalwert des aktuellen Empfangspegel-Schwellenwerts sind (S24).

5. Verfahren zum Filtern der falschen Kanalanfrage nach einem der Ansprüche 1 bis 4, wobei nach dem Filtern der aktuellen Kanalanfrage und der empfangenen Kanalanfragen gemäß den angepassten Filterbedingungen für falsche Kanalanfragen das Verfahren weiter umfasst:
basierend darauf, dass die Anzahl der empfangenen Kanalanfragen, die die Bedingung a erfüllen, innerhalb einer eingestellten Zeit auf Null gehalten wird, Wiederherstellen der Filterbedingungen für falsche Kanalanfragen so, dass sie die anfänglichen Filterbedingungen für falsche Kanalanfragen sind (S40).

6. Verfahren zum Filtern der falschen Kanalanfrage nach einem der Ansprüche 1 bis 4, **dadurch gekennzeichnet, dass** das Verfahren auf ein Basisstationssystem (BSS) angewendet wird und in einer Verarbeitungseinheit des BSS hervorgebracht wird.

7. Vorrichtung zum Filtern einer falschen Kanalanfrage, **dadurch gekennzeichnet, dass** es umfasst:
eine Vergleichskomponente (10), die dazu konfiguriert ist, eine aktuelle Kanalanfrage jeweils mit empfangenen Kanalanfragen zu vergleichen;
eine Beurteilungskomponente (20), die dazu konfiguriert ist, zu beurteilen, ob die aktuelle Kanalanfrage und die empfangenen Kanalanfragen voreingestellte anfängliche Filterbedingungen für falsche Kanalanfragen erfüllen oder nicht;
eine Regulierkomponente (30), die dazu konfiguriert ist, die Filterbedingungen für falsche Kanalanfragen gemäß der aktuellen Kanalanfrage und den empfangenen Kanalanfragen anzupassen; und
eine Filterkomponente (40), die dazu konfiguriert ist, die aktuelle Kanalanfrage und die empfangenen Kanalanfragen gemäß den angepassten Filterbedingungen für falsche Kanalanfragen zu filtern.

8. Vorrichtung zum Filtern der falschen Kanalanfrage nach Anspruch 7, **dadurch gekennzeichnet, dass** die anfänglichen Filterbedingungen für falsche Kanalanfragen umfassen:
a. die aktuelle Kanalanfrage und die empfangenen Kanalanfragen weisen denselben Direktzugriffswert auf;
b. ein Absolutwert einer Frame-Nummern-Differenz zwischen der aktuellen Kanalanfrage und jeder der empfangenen Kanalanfragen ist kleiner als oder gleich einem voreingestellten Frame-Nummern-Schwellenwert;
c. ein Absolutwert einer Time-Advance-Differenz zwischen dem aktuellen Anfragekanal und jeder der empfangenen Kanalanfragen ist kleiner als oder gleich einem voreingestellten Time-Advance-Schwellenwert;
d. ein Absolutwert einer Empfangspegeldifferenz zwischen der aktuellen Kanalanfrage und jeder der empfangenen Kanalanfragen ist kleiner als oder gleich einem voreingestellten Empfangspegel-Schwellenwert; und
e. nachdem die aktuelle Kanalanfrage jeweils mit den empfangenen Kanalanfragen verglichen wird, erreicht die Anzahl der empfangenen Kanalanfragen, die die Bedingungen a, b, und c erfüllen, einen Anzahlschwellenwert, oder erreicht die Anzahl der empfangenen Kanalanfragen, die die Bedingungen a, b und d erfüllen, den Anzahlschwellenwert.

9. Vorrichtung zum Filtern der falschen Kanalanfrage nach Anspruch 8, **dadurch gekennzeichnet, dass** die Vergleichskomponente (10) umfasst:
ein Vergleichselement (11), das dazu konfiguriert ist, die aktuelle Kanalanfrage mit einer gewissen Anzahl von empfangenen Kanalanfragen gemäß den anfänglichen Filterbedingungen für falsche Kanalanfragen zu vergleichen; und
ein Aufzeichnungselement (12), das dazu konfiguriert ist, einen Bereich eines aktuellen Frame-Nummern-Schwellenwerts, einen Bereich eines aktuellen Time-Advance-Schwellenwerts, einen Bereich eines aktuellen Empfangspegel-Schwellenwerts und einen aktuellen Anzahlschwellenwert der empfangenen Kanalanfragen, die die Bedingungen a, b und c erfüllen, oder einen aktuellen Anzahlschwellenwert der empfangenen Kanalanfragen, die die Bedingungen a, b und d erfüllen, die alle nach dem Vergleich erhalten werden, aufzuzeichnen;
wobei der Bereich des aktuellen Frame-Nummern-Schwellenwerts ein Intervall ist, das von einem Minimalwert und einem Maximalwert von berechneten Frame-Nummern-Differenzen zwischen der aktuellen Kanalanfrage und jeder der empfangenen Kanalanfragen gebildet wird; der Bereich des aktuellen Time-Advance-Schwellenwerts ein Intervall ist, das von einem Minimalwert und einem Maximalwert von berechneten Time-Advance-Differenzen zwischen der aktuellen Kanalanfrage und jeder der empfangenen Kanalanfragen gebildet wird; der Bereich des aktuellen Empfangspegel-Schwellenwerts ein Intervall ist, das von einem Minimalwert und einem Maximalwert von berechneten Empfangspegeldifferenzen zwischen der aktuellen Kanalanfrage und jeder der empfangenen Kanalanfragen gebildet wird, und der aktuelle Anzahlschwellenwert die Anzahl der empfangenen Kanalanfragen ist, die die Bedingungen a, b und c erfüllen, oder die die Bedingungen a, b und d in den empfangenen Kanalanfragen erfüllen.

10. Vorrichtung zum Filtern der falschen Kanalanfrage nach Anspruch 9, **dadurch gekennzeichnet, dass** die Regulierkomponente (30) umfasst:
ein erstes Beurteilungselement (31), das dazu konfiguriert ist, zu beurteilen, ob ein Prozentsatz der empfangenen Kanalanfragen, die die Bedingungen a, b und c erfüllen, oder der empfangenen Kanalanfragen, die die Bedingungen a, b und d erfüllen, in allen den Kanalanfragen mehr als oder gleich einem ersten Extremwert ist oder nicht;
ein erstes Regulierelement (32), das dazu konfiguriert ist, den Anzahlschwellenwert so anzupassen, dass er der aktuelle Anzahlschwellenwert ist, wenn vom ersten Beurteilungselement (31) ein JA-Ergebnis gegeben wird;
ein zweites Beurteilungselement (33), das dazu konfiguriert ist, wenn vom ersten Beurteilungselement (31) ein NEIN-Ergebnis gegeben wird, zu beurteilen, ob der Prozentsatz der empfangenen Kanalanfragen, die die Bedingung a erfüllen, in allen den Kanalanfragen mehr als oder gleich einem zweiten Extremwert ist oder nicht; und
ein zweites Regulierelement (34), das dazu konfiguriert ist, wenn vom zweiten Beurteilungselement (33) ein JA-Ergebnis gegeben wird, den Frame-Nummern-Schwellenwert, den Time-Advance-Schwellenwert und den Empfangspegel-Schwellenwert so anzupassen, dass sie jeweils gemäß dem Bereich des aktuellen Frame-Nummern-Schwellenwerts, dem Bereich des aktuellen Time-Advance-Schwellenwerts und dem Bereich des aktuellen Empfangspegel-Schwellenwerts ein Maximalwert des aktuellen Frame-Nummern-Schwellenwerts, ein Maximalwert des aktuellen Time-Advance-Schwellenwerts und ein Maximalwert des aktuellen Empfangspegel-Schwellenwerts sind.

11. Vorrichtung zum Filtern der falschen Kanalanfrage nach einem der Ansprüche 7 bis 10, **dadurch gekennzeichnet, dass** sie weiter umfasst:
eine Wiederherstellungskomponente (50), die dazu konfiguriert ist, basierend darauf, dass die Anzahl der empfangenen Kanalanfragen, die die Bedingung a, b und c erfüllen, oder die Anzahl der empfangenen Kanalanfragen, die die Bedingungen a, b und d erfüllen und die Bedingung a erfüllen, innerhalb einer eingestellten Zeit auf Null gehalten wird, die Filterbedingungen für falsche Kanalanfragen so wiederherzustellen, dass sie die anfänglichen Filterbedingungen für falsche Kanalanfragen sind.

12. Basisstationssystem (BSS), das die Vorrichtung zum Filtern der falschen Kanalanfrage nach einem der Ansprüche 7 bis 11 einschließt.

## Revendications

1. Procédé de filtrage d'une fausse demande de canal, **caractérisé en ce qu'**il comprend :
la comparaison d'une demande de canal actuelle respectivement avec des demandes de canal reçues, et le fait de juger si la demande de canal actuelle et les demandes de canal reçues satisfont ou non des conditions initiales prédéfinies de filtrage de fausse demande de canal (S10) ;
sur la base du fait que la demande de canal actuelle et les demandes de canal reçues satisfont une partie des conditions initiales prédéfinies de filtrage de fausse demande de canal, l'ajustement des conditions de filtrage de fausse demande de canal selon la demande de canal actuelle et les demandes de canal reçues (S20) ; et
le filtrage de la demande de canal actuelle et des demandes de canal reçues selon les conditions ajustées de filtrage de fausse demande de canal (S30).

2. Procédé de filtrage de la fausse demande de canal selon la revendication 1, **caractérisé en ce que** les conditions initiales de filtrage de fausse demande de canal comprennent :
a. la demande de canal actuelle et les demandes de canal reçues ont la même valeur d'accès aléatoire ;
b. une valeur absolue d'une différence de nombre de trames entre la demande de canal actuelle et chacune des demandes de canal reçues est inférieure ou égale à une valeur seuil de nombre de trames prédéfinie ;
c. une valeur absolue d'une différence d'avance de temps entre le canal de demande actuel et chacune des demandes de canal reçues est inférieure ou égale à une valeur seuil d'avance de temps prédéfinie ;
d. une valeur absolue d'une différence de niveau de réception entre la demande de canal actuelle et chacune des demandes de canal reçues est inférieure ou égale à une valeur seuil de niveau de réception prédéfinie ; et
e. après que la demande de canal actuelle est comparée respectivement avec les demandes de canal reçues, le nombre des demandes de canal reçues satisfaisant les conditions a, b et c atteint une valeur seuil de nombre, ou le nombre des demandes de canal reçues satisfaisant les conditions a, b et d atteint la valeur seuil de nombre.

3. Procédé de filtrage de la fausse demande de canal selon la revendication 2, **caractérisé en ce que** la comparaison de la demande de canal actuelle respectivement avec les demandes de canal reçues comprend :
la comparaison de la demande de canal actuelle respectivement avec un certain nombre de demandes de canal reçues selon les conditions initiales de filtrage de fausse demande de canal (S11) ; et
l'enregistrement d'une plage d'une valeur seuil de nombre de trames actuelle, d'une plage d'une valeur seuil d'avance de temps actuelle, d'une plage d'une valeur seuil de niveau de réception actuelle et la valeur seuil de nombre actuelle des demandes de canal reçues satisfaisant les conditions a, b et c ou la valeur seuil de nombre actuelle des demandes de canal reçues satisfaisant les conditions a, b et d, qui sont toutes obtenues après la comparaison (S12) ;
dans lequel la plage de valeur seuil de nombre de trames actuelle est un intervalle formé par une valeur minimale et une valeur maximale de différences de nombre de trames calculées entre la demande de canal actuelle et chacune des demandes de canal reçues ; la plage de valeur seuil d'avance de temps actuelle est un intervalle formé par une valeur minimale et une valeur maximale de différences d'avance de temps calculées entre la demande de canal actuelle et chacune des demandes de canal reçues ; la plage de valeur seuil de niveau de réception actuelle est un intervalle formé par une valeur minimale et une valeur maximale de différences de niveau de réception calculées entre la demande de canal actuelle et chacune des demandes de canal reçues et la valeur seuil de nombre actuelle est le nombre des demandes de canal reçues satisfaisant les conditions a, b et c ou satisfaisant les conditions a, b et d dans les demandes de canal reçues.

4. Procédé de filtrage de la fausse demande de canal selon la revendication 3, **caractérisé en ce que**, sur la base du fait que la demande de canal actuelle et les demandes de canal reçues satisfont une partie des conditions initiales prédéfinies de filtrage de fausse demande de canal, l'ajustement des conditions de filtrage de fausse demande de canal selon la demande de canal actuelle et les demandes de canal reçues comprend :
sur la base du fait que la demande de canal actuelle satisfait la partie des conditions initiales de filtrage de fausse demande de canal, le fait de juger si un pourcentage des demandes de canal reçues satisfaisant les conditions a, b et c ou des demandes de canal reçues satisfaisant les conditions a, b et d dans toutes les demandes de canal est ou non supérieur ou égal à une première valeur extrême (S21) ;
si OUI, l'ajustement de la valeur seuil de nombre pour qu'elle soit la valeur seuil de nombre actuelle (S22), et si NON, le fait de juger si le pourcentage des demandes de canal reçues satisfaisant la condition a dans toutes les demandes de canal est ou non supérieur ou égal à une seconde valeur extrême (S23) ; et
si OUI, l'ajustement de la valeur seuil de nombre de trames, de la valeur seuil d'avance de temps et de la valeur seuil de niveau de réception pour qu'elles soient respectivement une valeur maximale de la valeur seuil de nombre de trames actuelle, une valeur maximale de la valeur seuil d'avance de temps actuelle et une valeur maximale de la valeur seuil de niveau de réception actuelle selon la plage de valeur seuil de nombre de trames actuelle, la plage de valeur seuil d'avance de temps actuelle et la plage de valeur seuil de niveau de réception actuelle (S24).

5. Procédé de filtrage de la fausse demande de canal selon l'une quelconque des revendications 1 à 4, après le filtrage de la demande de canal actuelle et des demandes de canal reçues selon les conditions ajustées de filtrage de fausse demande de canal, le procédé comprend en outre :
sur la base du fait que le nombre des demandes de canal reçues satisfaisant la condition a est gardé à zéro au cours d'un temps défini, la restauration des conditions de filtrage de fausse demande de canal pour qu'elles soient les conditions initiales de filtrage de fausse demande de canal (S40).

6. Procédé de filtrage de la fausse demande de canal selon l'une quelconque des revendications 1 à 4, **caractérisé en ce que** le procédé est appliqué à un système de station de base (BSS) et mis en oeuvre dans une unité de traitement du BSS.

7. Dispositif de filtrage d'une fausse demande de canal, **caractérisé en ce qu'**il comprend :
un composant de comparaison (10) configuré pour comparer une demande de canal actuelle respectivement avec des demandes de canal reçues ;
un composant de jugement (20) configuré pour juger si la demande de canal actuelle et les demandes de canal reçues satisfont ou non des conditions initiales prédéfinies de filtrage de fausse demande de canal ;
un composant de régulation (30) configuré pour ajuster les conditions de filtrage de fausse demande de canal selon la demande de canal actuelle et les demandes de canal reçues ; et
un composant de filtrage (40) configuré pour filtrer la demande de canal actuelle et les demandes de canal reçues selon les conditions ajustées de filtrage de fausse demande de canal.

8. Dispositif de filtrage de la fausse demande de canal selon la revendication 7, **caractérisé en ce que** les conditions initiales de filtrage de fausse demande de canal comprennent :
a. la demande de canal actuelle et les demandes de canal reçues ont la même valeur d'accès aléatoire ;
b. une valeur absolue d'une différence de nombre de trames entre la demande de canal actuelle et chacune des demandes de canal reçues est inférieure ou égale à une valeur seuil de nombre de trames prédéfinie ;
c. une valeur absolue d'une différence d'avance de temps entre le canal de demande actuel et chacune des demandes de canal reçues est inférieure ou égale à une valeur seuil d'avance de temps prédéfinie ;
d. une valeur absolue d'une différence de niveau de réception entre la demande de canal actuelle et chacune des demandes de canal reçues est inférieure ou égale à une valeur seuil de niveau de réception prédéfinie ; et
e. après que la demande de canal actuelle est respectivement comparée avec les demandes de canal reçues, le nombre des demandes de canal reçues satisfaisant les conditions a, b et c atteint une valeur seuil de nombre, ou le nombre des demandes de canal reçues satisfaisant les conditions a, b et d atteint la valeur seuil de nombre.

9. Dispositif de filtrage de la fausse demande de canal selon la revendication 8, **caractérisé en ce que** le composant de comparaison (10) comprend :
un élément de comparaison (11) configuré pour comparer la demande de canal actuelle avec un certain nombre de demandes de canal reçues selon les conditions initiales de filtrage de fausse demande de canal ; et
un élément d'enregistrement (12) configuré pour enregistrer une plage d'une valeur seuil de nombre de trames actuelle, une plage d'une valeur seuil d'avance de temps actuelle, une plage d'une valeur seuil de niveau de réception actuelle et une valeur seuil de nombre actuelle des demandes de canal reçues satisfaisant les conditions a, b et c ou une valeur seuil de nombre actuelle des demandes de canal reçues satisfaisant les conditions a, b et d, qui sont toutes obtenues après la comparaison ;
dans lequel la plage de valeur seuil de nombre de trames actuelle est un intervalle formé par une valeur minimale et une valeur maximale de différences de nombre de trames calculées entre la demande de canal actuelle et chacune des demandes de canal reçues ; la plage de valeur seuil d'avance de temps actuelle est un intervalle formé par une valeur minimale et une valeur maximale de différences d'avance de temps calculées entre la demande de canal actuelle et chacune des demandes de canal reçues ; la plage de valeur seuil de niveau de réception actuelle est un intervalle formé par une valeur minimale et une valeur maximale de différences de niveau de réception calculées entre la demande de canal actuelle et chacune des demandes de canal reçues et la valeur seuil de nombre actuelle est le nombre des demandes de canal reçues satisfaisant les conditions a, b et c ou satisfaisant les conditions a, b et d dans les demandes de canal reçues.

10. Dispositif de filtrage de la fausse demande de canal selon la revendication 9, **caractérisé en ce que** le composant de régulation (30) comprend :
un premier élément de jugement (31) configuré pour juger si un pourcentage des demandes de canal reçues satisfaisant les conditions a, b et c ou des demandes de canal reçues satisfaisant les conditions a, b et d dans toutes les demandes de canal est ou non supérieur ou égal à une première valeur extrême ;
un premier élément de régulation (32) configuré pour ajuster la valeur seuil de nombre pour qu'elle soit la valeur seuil de nombre actuelle si un résultat OUI est donné par le premier élément de jugement (31) ;
un second élément de jugement (33) configuré pour, si un résultat NON est donné par le premier élément de jugement (31), juger si le pourcentage des demandes de canal reçues satisfaisant la condition a dans toutes les demandes de canal est ou non supérieur ou égal à une seconde valeur extrême ; et
un second élément de régulation (34) configuré pour, si un résultat OUI est donné par le second élément de jugement (33), ajuster la valeur seuil de nombre de trames, la valeur seuil d'avance de temps et la valeur seuil de niveau de réception pour qu'elles soient respectivement une valeur maximale de la valeur seuil de nombre de trames actuelle, une valeur maximale de la valeur seuil d'avance de temps actuelle et une valeur maximale de la valeur seuil de niveau de réception actuelle selon la plage de valeur seuil de nombre de trames actuelle, la plage de valeur seuil d'avance de temps actuelle et la plage de valeur seuil de niveau de réception actuelle.

11. Dispositif de filtrage de la fausse demande de canal selon l'une quelconque des revendications 7 à 10, **caractérisé en ce qu'**il comprend en outre :
un composant de restauration (50) configuré pour, sur la base du fait que le nombre des demandes de canal reçues satisfaisant les conditions a, b et c ou le nombre des demandes de canal reçues satisfaisant les conditions a, b et d et satisfaisant la condition a sont gardés à zéro au cours d'un temps défini, restaurer les conditions de filtrage de fausse demande de canal pour qu'elles soient les conditions initiales de filtrage de fausse demande de canal.

12. Système de station de base (BSS) incluant le dispositif de filtrage de la fausse demande de canal selon l'une quelconque des revendications précédentes 7 à 11.
